Europäisches Patentamt

(19) European Patent Office

Office européen des brevets

(11) Publication number : **0 243 325 B1**

(12) # EUROPEAN PATENT SPECIFICATION

(45) Date of publication of patent specification :
**27.11.91 Bulletin 91/48**

(51) Int. Cl.$^5$ : **B60J 5/04**

(21) Application number : **87830139.9**

(22) Date of filing : **10.04.87**

(54) Method for assembling a vehicle body with a vehicle door.

(30) Priority : **23.04.86 IT 6734086**

(43) Date of publication of application :
**28.10.87 Bulletin 87/44**

(45) Publication of the grant of the patent :
**27.11.91 Bulletin 91/48**

(84) Designated Contracting States :
**DE ES FR GB SE**

(56) References cited :
**EP-A- 0 145 306**
**EP-A- 0 170 150**
**WO-A-85/05599**

(73) Proprietor : **FIAT AUTO S.p.A.**
**Corso Giovanni Agnelli 200**
**I-10135 Torino (IT)**

(72) Inventor : **Giraudo, Giampiero**
**Via S. Giacomo 39/A**
**I-10092 Beinasco (Torino) (IT)**
Inventor : **Guglielmina, Lorenzo**
**Via Bartoli 20**
**I-10135 Torino (IT)**

(74) Representative : **Bosotti, Luciano et al**
**c/o Jacobacci-Casetta & Perani S.p.A. Via**
**Alfieri, 17**
**I-10121 Torino (IT)**

## Description

The present invention relates to a method for assembling a vehicle body with a vehicule door, and in particular a door comprising a body for hinging to the fixed part of the body with an end edge facing upwardly and with an outer face facing outwardly of the body, in which the body houses accessory closure means such as a movable window with its operating and guide devices (window winder, guides, weather strips,etc.) and a lock with its opening device. This type of door is known per se from e.g. EP-A-0145306.

According to a conventional solution, generally used in the motor vehicle industry, the body of the door is completely closed on its outer face by a metal sheet forming an integral part of the door structure.

The accessory closure elements or means are then mounted on the body of the door from the interior which is then closed by the application thereto of a covering panel.

This solution is not very practical, particularly with regard to the operations of assembly, adjustment and checking of the accessory closure elements.

In particular, when it is desired to carry out the checking and adjustment on line, that is, after the door has already been mounted on the fixed part of the body, it is necessary to work from inside the door after it has been opened. In many cases, this requires the employee to carry out the checking and testing from within the passenger compartment of the vehicle with the consequent increase in manufacturing times.

Another disadvantage which may be encountered later during the everyday use of the vehicle is due to the fact that, in order to remedy a breakdown or any functional problem found in the window winders or locks of the door, it is generally necessary to remove the covering panel applied to the inner face of the door. This is very difficult in many cases when account is taken of the fact that, as well as an arm rest and the handle for operating the window winders, accessories such as the ashtray, the loudspeakers of sound reproduction systems, etc. are frequently mounted on this panel.

EP-A-0 145 306 discloses a door of the aforesaid type, including:

– a framework defining at least one aperture in the outer face of the body for access to the interior of the body itself, and

– at least one panel which can be applied to the outer face to close the at least one aperture.

The present invention relates specifically to a method for assembling a vehicle body with a vehicle door made up of a door body for housing accessory closure means and an outer covering panel. Methods for assembling doors and vehicle bodies are known e.g. from EP-A-0145306 or EP-A-0170150. The purpose of the invention as set forth in claim 1 is that of providing an improved method of that kind.

In other words, the assembly of the door according to the invention, including the checking and final fixing of the auxiliary closure means, is achieved with a possibility of access to the interior of the body of the door through the apertures provided in the outer face being preserved until the last ,moment. The operations of checking, testing and final fixing of the accessory closure means may thus be carried out on a door already mounted on the fixed part of the body with the door itself closed. The panel which closes the apertures provided in the outer face of the door is then applied, thus completing the assembly of the door, only after the correct operation of all the parts of the door itself has been checked.

Similarly, the operations of maintenance and repair of the accessory closure means may be carried out from the outer side of the door, the panel applied to cover them being removed temporarily, without the need to remove the panel applied to the inner face, with the accessories (arm rest, ashtray, loudspeaker) mounted on it.

The invention will now be described purely by way of non-limiting example with reference to the appended drawings, in which:

Figure 1 is an exploded perspective view of the structure of a door to be used int the method according to the invention,

Figure 2 illustrates a possible variant of the door of Figure 1, with reference to only one of the parts illustrated in Figure 1 itself, and

Figures 3 to 5 illustrate schematically several phases in the assembly of a door according to the invention.

In the drawings a vehicle door is generally indicated 1. In the example illustrated, one is concerned particularly with a front left-hand door of a motor car.

The door 1 can be seen to comprise essentially three basic constituent units, namely:

– a body 2 constituting the lower part of the door framework and intended to be hinged to the "fixed" part of the car body in correspondence with a front edge 3, with an upper end edge 4 facing upwardly,

– a window unit 5 comprising a window 6 which can slide generally vertically through the edge 4 as a result of a driving force exerted by means of a window winding device 7, and

– an external covering panel 8 the characteristics and functions of which will be better explained below.

The body 2, which is usually made from pressed sheet metal, can be seen to include an outer frame 9 which is approximately rectangular in shape and a cross member 10 which extends generally parallel to the direction of the upper end edge 4. The cross member 10, to which the frame 9 is welded, constitutes the supporting structure proper of the body 2, while the function of the frame 9 is essentially that of forming an outer abutment surface and support member for the outer panel 8 and any internal finishing panel (not illustrated) with its accessories. The frame 9 and the cross member 10 together define a lattice structure which defines the interior of the body 2. More particularly, the side of the structure which is intended to define the outer face of the body 2 (that is, the face facing outwardly of the body) is completely open so as to allow access to the interior of the body 2, as shown schematically at 9' in the drawings.

Hinges 11, which enable the door to be connected to the vehicle body, are fixed to the body 2 by members, such as screws, which achieve a force-transmitting relationship with a front flange 10' of the cross member 10.

This arrangement of the hinges 11 usually allows the reinforcing member for the zone of attachment of the hinges which is present in doors currently in production to be eliminated.

Still on the cross member 10, at its end opposite the hinges 11, there is mounted the lock 12 which controls the closing of the door 1.

More particularly, the lock 12 must be operable either by a lever 13 located on the inner face of the door (that is, the face intended to face inwardly of the passenger compartment) or by an operating block 14 which projects from the body of the door 2 on its other face, that is, the outer face of the door.

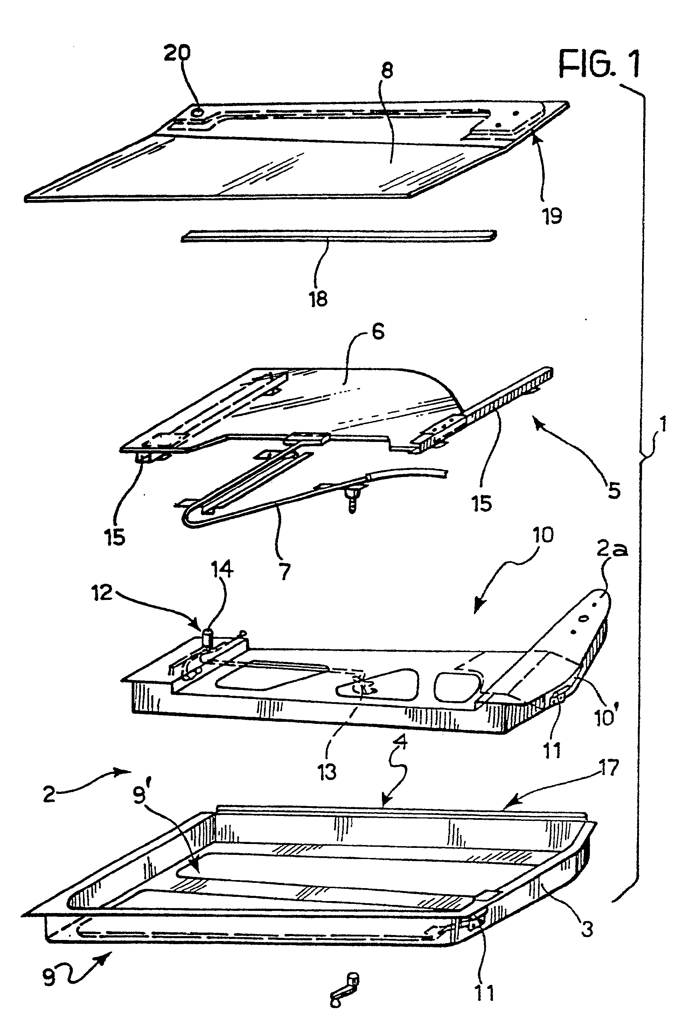

The window unit 5 to which Figure 1 refers is of the "open-top" type, that is, of the type in which the movement of the window 6 occurs along guides 15 located entirely within the body 2. This latter has, in the embodiment illustrated, a front portion 2a which extends slightly above the upper edge 4.

In the mounting of "open-topped" windows, used for preference in sports cars, the part of the door which projects outwardly and above the body 2, for a height which can be varied selectively by means of the window winder 7, is constituted solely by the window 6.

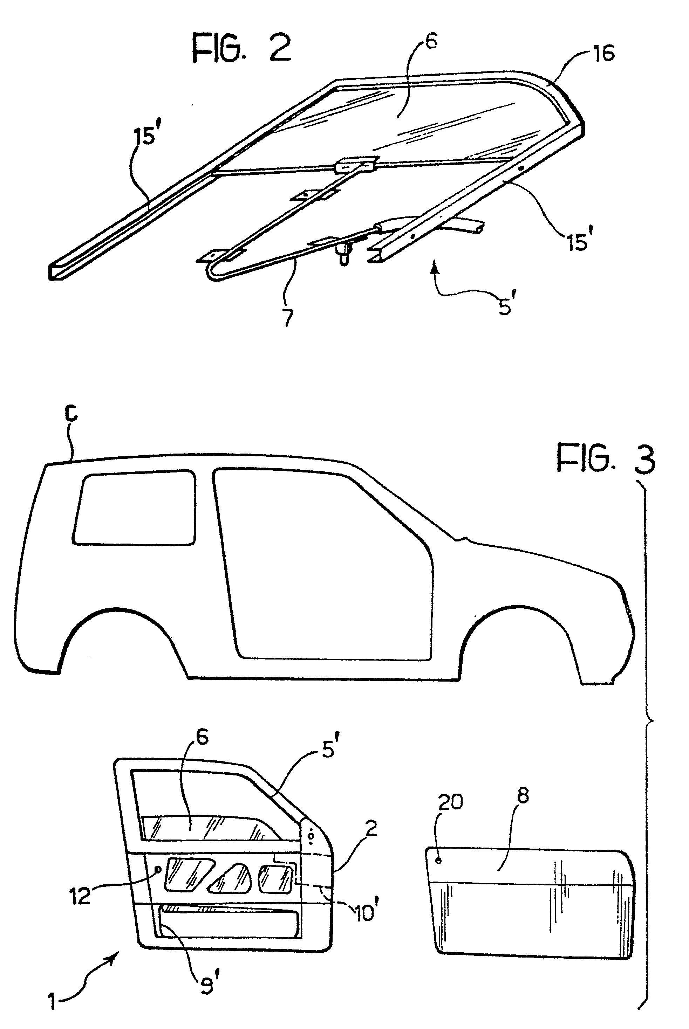

In the embodiment to which Figure 2 refers, a window unit 5' is mounted on the door in which the movement of the window 6 is achieved, as a result of the operating force exerted through the window winding device 7, along guides 15' which also extend from the body 2 so as to form a portal or arcuate guide structure 16 which protects the part of the window projecting from the body 2 as a result of the sliding of the window 6 itself through the upper edge 4.

In both embodiments, the window unit 5, 5' (which, together with the lock 12, constitutes the "accessory closure means" referred to in the claims below) has an associated weather strip located in correspondence with the upper end edge 4 of the body 2.

The weather strip (currently called a glass-scraping seal) has the function of preventing the window 6 from carrying drops of water and dirt particles deposited thereon into the body 2 during its lowering into the body 2.

In the door according to the invention, the weather strip is constituted by two lip members 17 and 18 which extend parallel to each other along the upper edge 4 of the body 2 on opposite sides of the plane of sliding of the window 6.

More particularly, the inner member 17, intended to cooperate with the inner face of the window 6, is fixed to the body 2, while the outer lip member 18, intended to cooperate with the outer face of the window 6, is fixed to the panel 8.

The fact that the outer face of the framework of the door is completely open enables the window unit 5, 5' to be assembled automatically without the need to overturn this unit or subassembly by complex movements during its introduction into the body of the door.

As indicated above, the panel 8 is preferably constituted by a shaped body of moulded plastics material, which is generally flat. It may usefully be provided with a stiffening member 19 located in its upper region, that is, the region intended to be applied so as to cover the part of the body 2 adjacent the end edge 4.

The panel 8 has an aperture 20 through which the external operating block 14 of the lock 12 is accessible from outside the door.

The panel 8 may be fitted to the body 2 in a generally snap-engaged configuration, for example, by making use of the resilient deformability of its constituent material, and then fixed to the body 2 by screwing from the inner side of the door.

In the embodiment referred to in Figures 3 to 5, the method of the invention provides for the initial pre-assembly of the door 1, the lock 12 and the window unit (in the embodiment illustrated, the window unit 5' of Figure 2) being located on the body 2 and the panel 8 being kept substantially separate from the door.

In these conditions, the whole of the body 2 is easily accessible even from the outer face of the door.

This means that, even after the application to the body 2 of any internal panel (not illustrated) with its accessories, including the handle for operating the window winder 7, it is still possible to check the lock 12 and the window unit 5'.

More particularly, at least with regard to the lock 12, it is possible to fix the lock 12 itself to the cross member 10 by "tacking", while retaining the possibility of modifying the position of assembly if necessary and of carrying out the final fixing only after its correct position and operation have been checked.

These checking operations (adjustment, final fixing, testing, etc.) may all be carried out from outside the door.

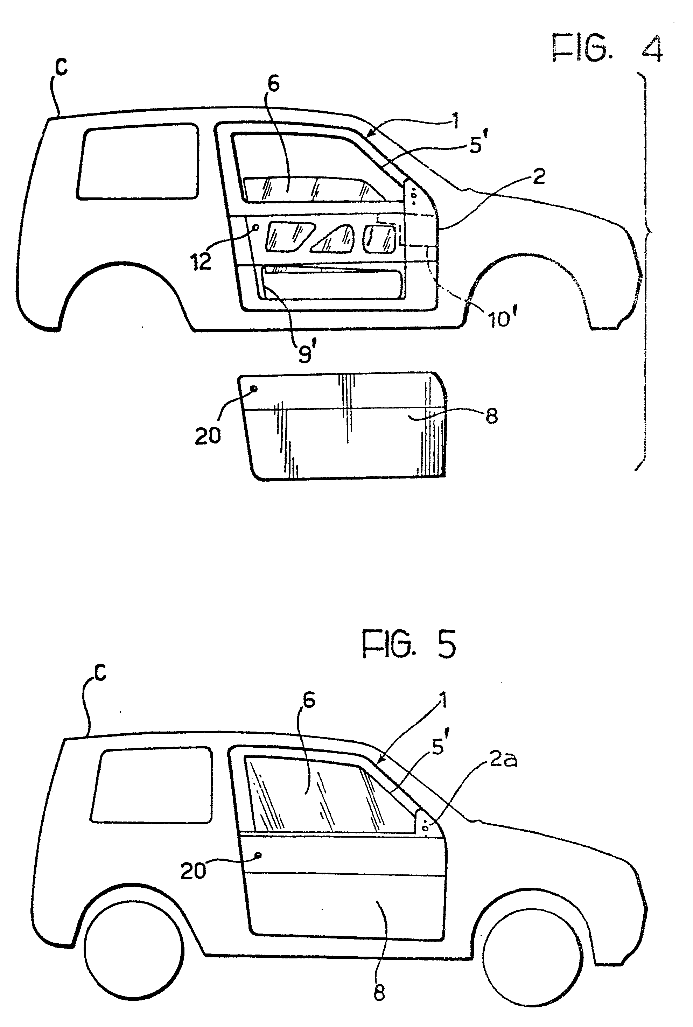

In particular, these operations may be carried out after the door 1 (with the exception of the panel 8) has already been mounted on the fixed part of the body C of a motor car and has been closed. This means that the checking operations can be carried out while the body C completed by the fitting of the door 1 advances along an assembly line (as shown schematically in Figure 4) without the need to open the door 1.

Finally, once the operations have been finished, the panel 8 can be applied so as to cover the outer face of the door, completing the assembly of the door (Figure 5).

In particular, the possibility is envisaged of carrying out a fine adjustment (setting) of the position of the panel 8 after it has been applied to close the outer face of the door. For example, the block 14 of the door lock may be surrounded by a bellows seal which ensures its sealing around the corresponding aperture 20 provided in the panel 8. This latter is finally fixed to the framework of the door by screws.

## Claims

1. A method for assembling a vehicle body (C) with a vehicle door made up of a door body (2) for housing accessory closure means (5,5', 12) and an outer covering panel (8), said method including the steps of:
   – mounting the door body (2) with the exception of the panel (8) on the fixed part of the vehicle body (C)
   – placing accessory closure means (5,5', 12) within the door body (2),
   – checking that the accessory closure means (5,5', 12) are located correctly within the door body (2) through at least one access aperture (9') located in the outer face of the door body (2) as the vehicle body (C) completed by the fitting of the door body (2) advances along an assembly line, and
   – finally applying said outer covering panel (8) to close said at least one access aperture (9').

2. A method according to Claim 1, characterised in that the door (1) is hinged to the fixed part of the body (C) of the vehicle before the checking of the correct disposition of the accessory closure means (5, 5', 12) within the body (2) of the door (1) through the at least one access aperture (9').

3. A method according to Claim 2, characterised in that the door (1) is closed against the fixed part of the body (C) of the vehicle before the checking of the correct disposition of the accessory closure means (5, 5', 12) within the body (2) of the door (1) through the at least one access aperture (9').

4. A method according to any one of claims 1 to 3, characterised in that at least one part (12) of the auxiliary closure means (5, 5', 12) is firmly fixed to the body of the door (1) after the checking of the correct disposition of the accessory closure means (5, 5', 12) within the body (2) of the door (1) through the at least one access aperture (9') and before the application of the at least one panel (8) for closing the at least one access aperture (9').

## Patentansprüche

1. Verfahren zum Zusammenbauen einer Fahrzeugkarosserie (C) mit einer Fahrzeugtür, die aus einem Türkörper (2) zur Aufnahme von Schließhilfsmitteln (5, 5', 12) und aus einer äußeren Abdeckplatte (B) besteht, mit folgenden Verfahrensschritten:
   – Montieren des Türkörpers (2) mit Ausnahme der Abdeckplatte (8) an dem festen Teil der Fahrzeugkarosserie (C),
   – Anbringen der Schließhilfsmittel (5, 5', 12) in dem Türkörper (2),
   – Prüfen durch wenigstens eine in der Außenseite des Türkörpers (2) angeordnete Zugangsöffnung (9'), ob die Schließhilfsmittel (5, 5', 12) korrekt in dem Türkörper (2) angeordnet sind, während die durch den Türkörper (2) vervollständigte Fahrzeugkarosserie (C) sich längs einer Montagelinie fortbewegt, und
   – Anbringen der äußeren Abdeckplatte (8), um die wenigstens eine Zugangsöffnung (9') zu veschließen.

2. Verfahren nach Anspruch 1, dadurch gekennzeichnet, daß die Fahrzeugtür (1) mit Scharnieren an dem festen Teil der Fahrzeugkarosserie (C) verbunden wird, bevor die korrekte Anordnung der Schließhilfsmittel (5, 5', 12) in dem Türkörper (2) durch die wenigstens eine Zugangsöffnung (9) geprüft wird.

3. Verfahren nach Anspruch 2, dadurch gekennzeichnet, daß die Fahrzeugtür (1) gegen den festen Teil der Fahrzeugkarosserie (C) geschlossen wird, bevor die korrekte Anordnung der Schließhilfsmittel (5, 5', 12) in dem Türkörper (2) durch die wenigstens eine Zugangsöffnung (9') geprüft wird.

4. Verfahren nach einem der Ansprüche 1 bis 3, dadurch gekennzeichnet, daß wenigstens ein Teil (12) der Schließhilfsmittel (5, 5', 12) an dem Türkörper (2) fest fixiert wird, nachdem die korrekte Anordnung der Schließhilfsmittel (5, 5', 12) in dem Türkörper (2) durch die wenigstens eine Zugangsöffnung (9') geprüft wurde und bevor die wenigstens eine Abdeckplatte (8) zum Schließen der wenigstens einen Zugangsöffnung (9') angebracht wird.

## Revendications

1. Procédé de montage d'une carrosserie de véhicule (C) comprenant une porte de véhicule composée d'un corps de porte (2) destiné à contenir des moyens accessoires de fermeture (5, 5', 12) et un panneau de revêtement extérieur (8), ledit procédé comprenant les phases consistant à :

- monter le corps (2) de la porte, à l'exception du panneau (8), sur la partie fixe de la carrosserie (C) du véhicule,
- placer les moyens accessoires de fermeture (5, 5', 12) dans le corps (2) de la porte,
- vérifier que les moyens accessoires de fermeture (5, 5', 12) sont correctement disposés à l'intérieur du corps (2) de la porte, à travers au moins une ouverture d'accès (9') prévue dans la face extérieure du corps (2) de la porte, pendant que la carrosserie (C), complétée par le montage du corps (2) de la porte avance le long d'une chaîne de montage, et
- appliquer finalement ledit panneau de revêtement extérieur (8) pour fermer ladite au moins une ouverture d'accès (9').

2. Procédé selon la revendication 1, caractérisé en ce que la porte (1) est articulée sur la parte fixe de la carrosserie (C) du véhicule avant la vérification de la disposition correcte des moyens accessoires de fermeture (5, 5', 12 ) à l'intérieur du corps (2) de la porte (1), qui s'effectue à travers ladite au moins une ouverture d'accès (9').

3. Procédé selon la revendication 2, caractérisé en ce que la porte (1) est fermée contre la partie fixe de la carrosserie (C) du véhicule avant la vérification de la disposition correcte des moyens accessoires de fermeture (5, 5', 12) à l'intérieur du corps (2) de la porte (1), qui s'effectue à travers ladite au moins une ouverture d'accès (9').

4. Procédé selon une quelconque des revendications 1 à 3, caractérisé en ce qu'au moins une partie (12) des moyens auxiliaires de fermeture (5, 5', 12) est fixée solidement au corps de la porte (1) après la vérification de la disposition correcte des moyens accessoires de fermeture (5, 5', 12) à l'intérieur du corps (2) de la porte (1), qui s'effectue à travers ladite au moins une ouverture d'accès (9'), et avant l'application dudit au moins un panneau (8) qui ferme ladite au moins 'une ouverture d'accès (9').

FIG. 1

# FIG. 2

# FIG. 3

FIG. 4

FIG. 5